# EUROPÄISCHE PATENTSCHRIFT

(11) **EP 0 893 746 B1**
(45) Veröffentlichungstag und Bekanntmachung des Hinweises auf die Patenterteilung: **05.03.2003**
(21) Anmeldenummer: 98111062.0
(22) Anmeldetag: 17.06.1998
(51) Int. Cl.: G05B 19/042

(54) **Prozessdiagnosesystem und -Verfahren**
Process diagnosis system and method therefor
Système et méthode de diagnostic d'un processus

(30) Priorität: 25.07.1997 DE 19732046
(43) Veröffentlichungstag der Anmeldung: 27.01.1999
(73) Patentinhaber: ABB PATENT GmbH, 68526 Ladenburg (DE)
(72) Erfinder: Borchers, Hans-Werner, Dipl.-Math., 69121 Heidelberg (DE); Otte, Ralf, Dipl.-Ing., 69469 Weinheim (DE); Speh, Rainer, Dr. Ing., 64331 Weiterstadt (DE); Weisang, Claus, Dr. rer. nat., 69181 Leimen (DE)
(74) Vertreter: Miller, Toivo

(56) Entgegenhaltungen:
- DE-A- 19 520 740
- US-A- 5 333 240
- US-A- 5 448 681
- US-A- 5 581 459
- KIM K -H ET AL: "APPLICATION OF HIERARCHICAL NEURAL NETWORKS TO FAULT DIAGNOSIS OF POWER SYSTEMS" , INTERNATIONAL JOURNAL OF ELECTRICAL POWER & ENERGY SYSTEMS,GB,JORDAN HILL, OXFORD, VOL. 15, NR. 2, PAGE(S) 65-70 XP000503241 ISSN: 0142-0615 * das ganze Dokument *

## Beschreibung

Die Erfindung bezieht sich auf ein Prozeßdiagnosesystem und ein Verfahren zur Diagnose von Vorgängen und Zuständen eines technischen Prozesses.

Das Verfahren ist insbesondere geeignet zur Diagnose von Vorgängen und Zuständen einer Kraftwerksanlage.

Es ist allgemein bekannt, in technischen Anlagen eine Prozeßdiagnose auf der Grundlage meßtechnisch erfaßter Signale durchzuführen. Dabei wird in bekannten Anlagen die eigentliche Messung, die Datenerfassung, dezentral realisiert; die anschließende Diagnose erfolgt zentral in einem Prozeßrechner.

Weiterhin sind mehrere Vorgehensweisen zur Durchführung von technischen Diagnosen und zur Prozeßführung bekannt. Neuartige Ansätze für eine fortgeschrittene Diagnose zielen auf eine Integration von wissensbasierten Systemen in die Leittechnik, wie aus M. Polke, Prozeßleittechnik, Kapitel ' Integration wissensbasierter Systeme in die Leittechnik, Seite 813 ff., Oldenbourg Verlag, 1994 hervorgeht. Generell erfolgt eine Diagnose in mehreren Schritten: Fehlererkennung, Fehlerlokalisierung und Fehlerursachenbestimmung. Weit verbreitet sind sogenannte Alarmmeldungen, die in Alarmhierarchien zusammengefaßt werden. Höherwertige Formen der Diagnose werden gegenwärtig in zentralen, komplexen Anwendungsprogrammen, z.B. mittels Expertensystemen, durchgeführt.

Der Nachteil einfacher Diagnoseverfahren auf der Basis von Alarmhierarchien besteht in einer unzureichenden Fehlerdetektion und Fehlerursachenbestimmung. Besonders für eine Diagnose im Fall transienter Vorgänge reicht es nicht aus, mit statischen Fehlerschranken zu arbeiten. Um dieses Problem zu beheben, wurden prozeßzustandsabhängige Referenzmodelle eingeführt. Diese Referenzmodelle geben in Abhängigkeit vom aktuellen Prozeßzustand den erwarteten Sollwert und eine maximal zulässige Abweichung von diesem Sollwert vor. Wird eine Abweichung erkannt, berechnet ein nachgeschaltetes Fehlerlokalisierungssystem den Fehlerort und die Fehlerursache. Typischerweise wird diese Form der erweiterten Prozeßdiagnose durch modell- oder regelbasierte Expertensysteme durchgeführt, wie z.B. veröffentlicht in "Das Expertensystem MODI" in ABB Technik / 6, 1994 (Seiten 38 bis 46).

Die Nachteile dieser dynamischen Diagnoseverfahren bestehen erstens in der weiterhin eingeschränkten Diagnosefähigkeit für spezifische Anlagenkomponenten, aufgrund einer zentral durchgeführten Diagnose, da zentral nicht alle Prozeßgrößen verfügbar sind; zweitens in dem sehr hohen Engineeringaufwand zum Aufbauen der Referenzmodelle und drittens in dem hohen Aufwand, um die Fehlerbäume oder Regeln für die Fehlerursachen an die jeweiligen Anlage anzupassen. Ein weiterer Nachteil bisheriger Diagnoseanwendungen ist ihre Unflexibilität, da nach Änderungen der Anlage, das Diagnosesystem neu auf diese Anlage eingestellt werden muß.

Der Erfindung liegt die Aufgabe zugrunde, ein Prozeßdiagnosesystem und ein Verfahren anzugeben, welche eine dezentrale und zuverlässige Diagnose ermöglichen bei gleichzeitiger Reduzierung der Inbetriebnahme- und Engineeringkosten des gesamten Diagnosesystems. Ein weiteres Ziel liegt darin, ein Verfahren für eine adaptive Diagnose anzugeben, in dem Sinne, daß das Diagnosesystem selbst Änderungen in der Anlage und in der Fahrweise erkennen und sich auf diese einstellen kann.

Diese Aufgabe wird durch ein Diagnosesystem mit den im Anspruch 1 angegebenen Merkmalen gelöst. Vorteilhafte Ausgestaltung sowie ein Diagnoseverfahren sind in weiteren Ansprüchen angegeben.

Das Diagnosekonzept verwendet einen Ansatz, der auf dem Konzept eines verteilten Leittechniksystems aufsetzt, Diagnoseaufgaben an autonome und intelligente Agenten vergibt und mit einem adaptiven Lernansatz, realisiert durch neuronale Netze, versieht. Diagnoseaufgaben werden dabei genau dorthin vergeben, wo sie auch tatsächlich durchgeführt werden können.

Für einen solchen Diagnoseansatz hat die Verteilung der Diagnoseaufgaben den Vorteil, daß nicht der vollständige Prozeß bzw. die gesamte Anlage, sondern jeweils nur ein begrenzter Bereich modelliert werden muß. Diese Verteilung lehnt sich an die beim Design und bei der Konfiguration bereits vorhandenen Komponenten oder Korngrößen an, wodurch wichtige Informationen aus diesen Bereichen in die Diagnose übernommen werden können. Dadurch reduziert sich der Engineeringaufwand für das Diagnosesystem entscheidend.

Ein Diagnosesystem für technische Prozesse mit Verteilung der Diagnoseaufgaben auf hierarchisch zusammenwirkende Neuronale Netze ist aus der Druckschrift US 5,333,240 bekannt.

Beim erfindungsgemäßen Diagnosesystem wird die Diagnosefähigkeit in Form eines Multi-Agentensystems (MAS) in ein Leitsystem implementiert. Dabei erfolgt die Verteilung der einzelnen autonomen Softwaremodule des Multiagentensystems, der sogenannten Diagnoseagenten, vorzugsweise und wenigstens teilweise direkt vor Ort in einzelne Feldgeräte. Diese Technik und ihre anschließende Adaption wird durch die Kombination und Verbesserung der folgenden neuen Techniken ermöglicht: Feldbustechnologien, Multiagentensysteme und Neuronale Netze. Diese drei Technologien und ihre Verwendung für das erfindungsgemäße Diagnoseverfahren bzw. -system werden im folgenden kurz erläutert:

Der Einsatz der Feldbustechnologien schafft die Möglichkeit zur Integration von intelligenten Softwaremodulen, den Agenten, direkt in die intelligenten Feldgeräte. Da diese Diagnoseagenten vor Ort an sehr detaillierte Informationen über die zu untersuchenden Komponenten herankommen, wird auch eine zuverlässigere Diagnose möglich. Die Feldbustechnologie ist eine Technologie die die Intelligenz eines Überwachungssystems zurück in die Feldebene bringt. Hauptbestandteil dieser Technik sind intelligente Aktoren und Sensoren, die über einen Feldbus miteinander kommunizieren, wie z.B. beschrieben ist in "Bussysteme für die Prozeßleittechnik" Kapitel "Nutzen eines Feldbusses", J. Rathje, VDE-Verlag, 1995, Seiten 91 bis 111.

Aufbauend auf den neuen Möglichkeiten der Feldbussysteme, werden die einzelnen Diagnosemodule in den intelligenten Feldgeräten miteinander verknüpft. Diese Verknüpfung wird realisiert durch die Anwendung der Technologie von Multi-Agentensystemen, wobei die notwendige Kooperation und Kommunikation der Agenten untereinander durch das Multiagentensystem ermöglicht wird.

Intelligente Agenten und Multi-Agentensysteme sind eine neuere Technologie aus dem Bereich der Verteilten Künstlichen Intelligenz (VKI), wie z.B. aus H. J. Müller, Verteilte Künstliche Intelligenz - Methoden und Anwendungen, Seiten 24 bis 29 und Seiten 37 bis 40, Bibliographisches Institut, Mannheim, 1993 hervorgeht. Unter einem intelligenten Agenten versteht man dabei ein autonomes Software-Modul, das seine 'Umgebung' wahrnehmen und selbständig Aufgaben ausführen kann. Ein Mehr- oder Multi-Agentensystem besteht aus einer Menge von Agenten, die miteinander kommunizieren und kooperieren, um eine gemeinsame Aufgabe, etwa eine Prozeßdiagnose zu bewältigen.

Der Vorteil dieses Verfahrens liegt daran, daß ein einzelner Agent für jeweils nur einen kleinen Teilausschnitt der technischen Anlage zuständig ist, so daß die Diagnose direkt vor Ort in der Anlage erfolgen kann. Ergebnisse der Diagnose werden von dem jeweiligen zuständigen Agenten an den verfahrenstechnisch 'nächst-höheren' Diagnoseagenten weitergereicht, bis es auf einer oberen Ebene zu einer Gesamtdiagnose der gesamten Anlage kommt, die dann z.B. an den Prozeßleitrechner in der Warte weitergemeldet wird.

Die Adaptivität der einzelnen Softwareagenten wird erreicht durch den Einsatz der Technologie Neuronaler Netze innerhalb der einzelnen Agenten vor Ort. In der Inbetriebnahmephase des Diagnosesystems erlernen die einzelnen Agenten auf der Basis Neuronaler Netze das SOLL-Verhalten ihrer Komponenten, und damit bauen sie selbständig ein Referenzmodell der bestehenden Anlage auf. Verändert sich die Anlage, z.B. durch Alterungserscheinungen oder durch Baumaßnahmen, so kann der Diagnoseagent die Änderung erkennen und automatisch oder auch manuell ausgelöst, die neuen Zustände der Anlage erlernen.

Im Laufe des Betriebes der Anlage kann durch den Einsatz der Neuronaler Netze das vorhandene Wissen weiter ausgebaut werden, indem Neuronale Netze verwendet werden, die ein inkrementelles Lernen ermöglichen. Z.B. lassen sich sogenannte Radiale-Basisfunktionen-Netze (RBF-Netze) dazu ausbauen. Eine Einführung in die Theorie dieser RBF-Netze gibt A. Zell, Simulation Neuronaler Netze, Seiten 225 bis 239, Addision-Wesley Verlag, 1. Auflage, 1994. RBF-Netze haben den Vorteil, daß sie lokal approximieren. Damit ist es möglich einen neuen Zusammenhang - der im allgemeinen im Extrapolationsraum des Netzes liegt- neu im Netz zu lernen ohne bekanntes Wissen zu zerstören. Diese Eigenschaft wird genutzt, um die Wissensbasis eines Netzes inkrementell zu erweitern.

Eine weitere Beschreibung des Diagnosesystems und seiner Arbeitsweise sowie das Vorgehen zum Entwurf eines Multiagentensystems erfolgt nachstehend anhand von Ausführungsbeispielen, die in den Zeichnungsfiguren dargestellt sind.

Es zeigt:
- Fig. 1: die Integration von Diagnoseagenten in ein Leitsystem,
- Fig. 2: die innere Struktur eines Diagnoseagenten,
- Fig. 3: die Integration eines Neuronalen Netzes in ein Fehlererkennungsmodul des Agenten,
- Fig. 4: die Wirkungsweise der Fehlererkennung,
- Fig. 5: die Struktur eines Agentensystems, und
- Fig. 6: die Konfiguration eines Agenten.

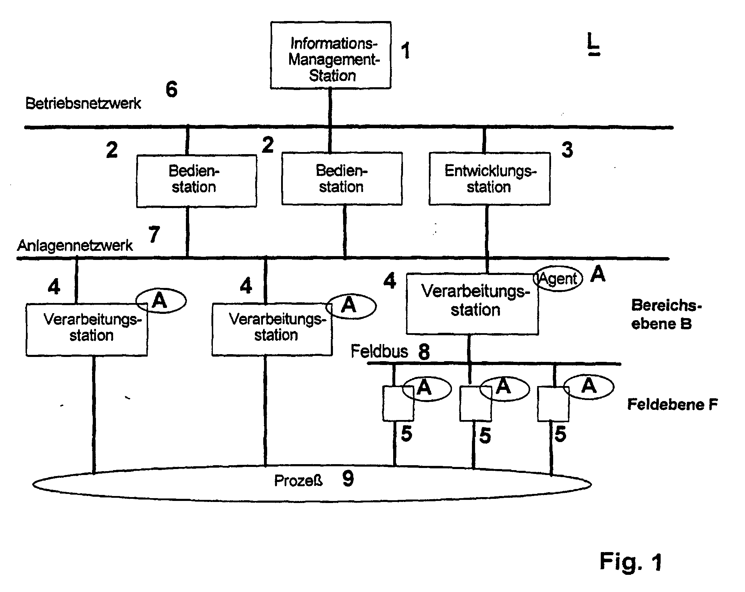

Fig. 1 zeigt die Struktur eines verteilten Leitsystems L zur Steuerung und Regelung eines Prozesses 9. Die Struktur weist mehrere Ebenen auf, insbesondere eine hier relevante Feldebene F und Bereichsebene B. Die Ebenen sind gebildet durch Aggregate oder Subsysteme, in Fig. 1 durch eine Informationsmanagementstation 1, Bedienstationen 2, eine Entwicklungsstation 3, Verarbeitungsstationen 4 und Feldgeräte 5. Die Kommunikation zwischen Ebenen erfolgt über ein Betriebsnetzwerk 6, ein Anlagennetzwerk 7 und einen Feldbus 8.

Fig. 1 zeigt weiterhin beispielhaft die Integration von Diagnoseagenten A in das Leitsystem L. Diagnoseagenten A sind in verschiedenen Ebenen des Leitsystems L realisiert, insbesondere in der Feldebene als Teil von intelligenten Feldgeräten 5, und auf der Bereichsebene als Teil von Verarbeitungsstationen 4. In der Feldebene ist der Diagnoseagent A hauptsächlich mit der Früherkennung von Störungsursachen aufgrund von Komponentenfehlern betraut; beispielsweise wird als Störungsursache ein defektes Ventil diagnostiziert. Auf einer übergeordneten Ebene beobachtet der Diagnoseagent einen Bereich, beispielsweise ein Behälteroder Pumpensystem.

Die einzelnen Diagnoseagenten A sind in der Lage sein, selbständig und autonom Aufgaben zu lösen. Die Hauptaufgabe eines Diagnoseagenten besteht darin, daß er Fehlfunktionen in seinem Bereich erkennt. Dazu benötigt er einerseits Wissen über seinen Bereich, realisiert durch ein Modell, und andererseits Wissen über seine Agenten-Umgebung, d.h. er muß die Agenten kennen, auf deren Information er beim Lösen seiner Aufgabe angewiesen ist. Daraus ergibt sich, gleich in welcher Ebene der Verfahrens-Hierarchie sich der Agent befindet und mit welcher Aufgabe er betraut ist, eine immer gleiche innere Struktur, mit einem Fehlererkennungsmodul und einem Kooperationsmodul. Das Fehlererkennungsmodul erkennt aufgetretene Abweichungen in der Anlage, in der der Prozeß läuft, und das Kooperationsmodul ist für die Kommunikation der Agenten untereinander zuständig. Diese Kommunkation ist ein wesentliche Voraussetzung für die Funktionalität der Fehlerursachenbestimmung.

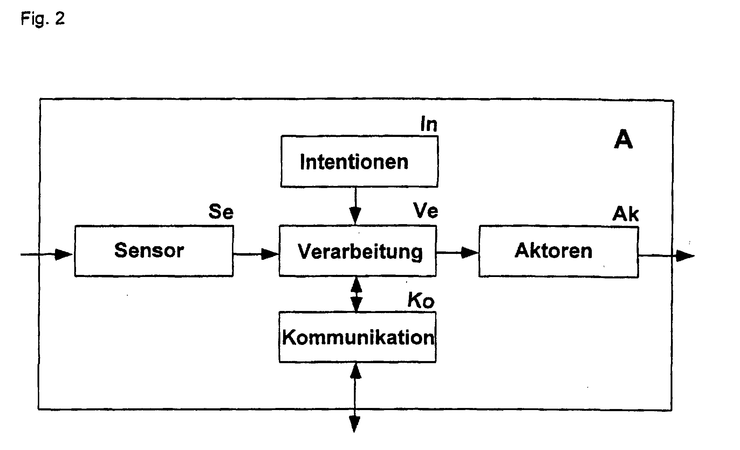

Fig. 2 zeigt die innere Struktur eines Diagnoseagenten A. Mit einem Sensor-Modul Se empfängt der Agent Prozesswerte und Nachrichten aus dem Leitsystem L bzw. direkt von dem Feldgerät 5, dem er zugeordnet ist. Mit einem Aktoren-Modul Ak wirkt er wieder auf den Prozess zurück, indem er Sollwerte vorgibt oder Parameter von Feldgeräten einstellt. Agenten, für die keine Prozeßeingriffe definiert sind, benutzen das standardmäßig vorhandene Aktoren-Modul Ak nicht. In einem Verarbeitungs-Modul Ve werden sein Wissen über den Prozess, sein Prozessmodell, und seine Ziele, nämlich eine Diagnose zu erstellen zusammengeführt. Werden zur Lösung dieser Aufgabe mehr Informationen benötigt, kann der Agent mittels eines Kommunikations-Moduls Ke Nachrichten an andere Agenten aussenden. Die physikalische Kommunikation der Agenten erfolgt mittels eines MAS-Protokolls, z. B. KIF- oder KQML-Protokoll, über einen Bus des Leitsystems, z. B. den Profibus (vergl. erwähnte Literaturstelle H.J. Müller, Verteilte KL-Methoden und Anwendungen, Seiten 76 bis 81). Das Verarbeitungsmodul Ve enthält das erwähnte Fehlererkennungsmodul.

Die Diagnose wird stets lokal versucht, d. h. zuerst in den kleinsten Einheiten, in denen eine Fehlerlokalisierung möglich ist. Besonders bei der Integration der Agenten in die intelligenten Feldgeräte werden die Daten 'vor Ort' ausgewertet. Damit läßt sich der Agent zur Eigendiagnose des Feldgerätes einsetzen. Ein Intentionen-Modul In des Agenten A enthält die Aufgabenstellungen und Pläne des Agenten und eine Beschreibung seiner Stelle innerhalb des Multiagentensystems MAS.

Die eingesetzten Methoden zur Diagnose sind unabhängig vom Gesamtsystem und können zum Beispiel auch vom Hersteller oder Zulieferer einer Komponente bereitgestellt werden. Der Aufwand im Engineering ist dadurch reduzierbar, daß die Eigendiagnose auf das Gerät oder die Komponente zugeschnitten ist und unabhängig vom Systemzustand bestimmt werden kann. Die Funktion der Eigendiagnose kann ausgedehnt werden bis hin zu Wartungsanfragen und Angaben zur Optimierung.

Für Komponenten, für die eine Eigendiagnose nicht möglich ist, sowie für alle überlagerten Regelkreise, (Sub-)Systeme oder Verfahrensmodule ist eine Modellierung des Gutzustandes notwendig. Diese Modellierung hat das Ziel, eine Art Auslösefunktion zu realisieren, mit der eine weitere Diagnose auf anderen Ebenen angestoßen werden kann. Der Gutzustand eines Systems in einem so komplexen technischen Prozeß wie dem eines Kraftwerkes läßt sich erfahrungsgemäß nicht im Vorfeld simulieren oder in Planungsdaten beschreiben. Die wichtigste Forderung an die Modellierung des Gutzustandes ist daher, daß dieser Gutzustand - etwa in der Inbetriebnahmephase - erlernt werden und im späteren Betrieb weiter angepaßt werden kann. Eine Bestimmung der Fehlerursachen ist damit noch nicht erreicht.

Die Modellierung des Gut- bzw. Soll-Verhaltens der jeweils zu untersuchenden Komponenten erfolgt durch den Einsatz von Neuronalen Netzen; dadurch ist es möglich das angemessene Prozess-Verhalten automatisch zu erlernen. Diese Modellierung wird bei der Erstinbetriebnahme adaptiert und nachträglich bei jeder Änderung in der Anlage neu angepaßt. Erkennt der Agent im späteren Betrieb, daß seine Modelle nicht mehr mit dem Orginalverhalten übereinstimmen, werden die Modelle, die der Agent zur Fehlererkennung heranzieht, hinsichtlich ihrer Aussagekraft bewertet und selbständig neu angepasst und unter Beobachtung einer längeren Betriebsphase optimiert.

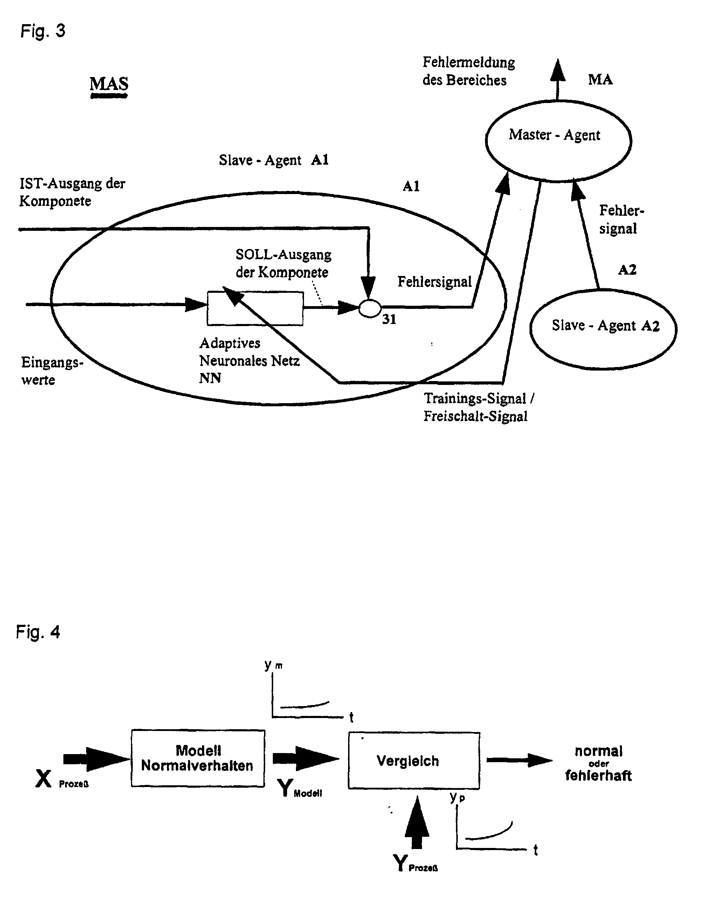

Fig. 3 zeigt schematisch ein Multiagentensystem MAS. Dargestellt sind ein Masteragent MA und ein erster und ein zweiter Slave-Agent A1, A2. Der Masteragent MA ist zu verstehen als verfahrenstechnisch übergeordneter Agent. In allen Agenten ist jeweils ein Neuronales Netz NN integriert. Mit "Eingangswerten" sind die Werte bezeichnet, anhand derer ein Agent während der Erstinbetriebnahme das Referenzverhalten der von ihm zu überwachenden Komponente automatisch erlernt. Mit "IST-Ausgang der Komponente" sind die Informationen bezeichnet, die der Agent während der Anwendungsphase von der zu überwachenden Komponente als Istwerte erhält. Mit "Soll-Ausgang der Komponente" sind die vom Neuronalen Netz NN aufgrund seines Wissens gelieferten Werte bezeichnet, die an einer Vergleichsstelle 31 mit den Istwerten verglichen werden. Als Fehlersignal" wird eine erkannte Abweichung an den übergeordneten Diagnoseagenten MA weitergeleitet. Aus dem Geamtkontext, d.h. aus der Summe aller Fehlermeldungen wird die Diagnoseaufgabe im übergeordneten Agenten MA realisiert. Ist kein Fehler erkannt worden, meldet der übergeordnete Agent MA dem untergeordneten Agent A1 als "Trainings -Signal" zurück, daß kein Verfahrensfehler vorlag und daß damit das Referenzmodell des untergeordneten Agenten A1 an das neue Verhalten angepaßt werden muß. Diese Anpassung kann automatisch oder manuell erfolgen. Im Falle der automatischen Anpassung wird das on-line Lernen des Neuronalen Netzes im Agenten A1 gestartet. Auf diese Weise wird eine ständige automatische Anpassung und Verbesserung an die Funktionalität der bestehenden Anlage erzielt. Die Fehlerdetektion erfolgt demnach modellbasiert, indem das aktuelle Prozeßabbild ständig mit dem in den neuronalen Netzen der einzelnen Agenten gespeicherten Prozeßabbilder verglichen wird. Fig. 4 zeigt ein Strukturbild zur beschriebenen Fehlererkennung.

Die Verteilung der Diagnose ergibt sich aus der Definition von funktional abgeschlossenen Bereichen, denen Diagnoseagenten zugeordnet werden. Diese Bereiche werden je nach Anwendung wiederum in einer höheren leittechnischen Hierarchieebene zu (Sub-)Systemen zusammengefaßt, die sich von anderen Systemen funktional abgrenzen. Die unterste Hierarchieebene sind die intelligenten Feldgeräte am Feldbus. Da Feldbuskomponenten selbständig komplexere Aufgabe wahrnehmen, können auch sie als funktionale Einheiten betrachtet werden. Die Anzahl der hierarchischen Ebenen ist von der Anwendung abhängig.

Die Diagnoseagenten sind in ihrer Aufgabe hierarchisch entsprechend der Struktur der Verfahrenstechnik aufeinander bezogen. Sie sind daher in der Lage, Daten zu holen, etwa konkrete Zustandsinformationen aus Feldgeräten, aber auch, Informationen selbständig zu weiter oben liegenden Ebenen der Leittechnik weiterzugeben und dadurch den Diagnoseprozeßvoranzutreiben. Dazu benötigen die Diagnoseagenten Wissen über ihre Stellung im Prozeß, die physikalischen Anordnungen und Verbindungen der für sie relevanten Prozessteile, aber auch Wissen über kausale Beziehungen zwischen Fehlerzuständen. Es ist hervorzuheben, daß die hierarchische Struktur hier nur beispielhaft gewählt ist, aber keine Bedingung ist.

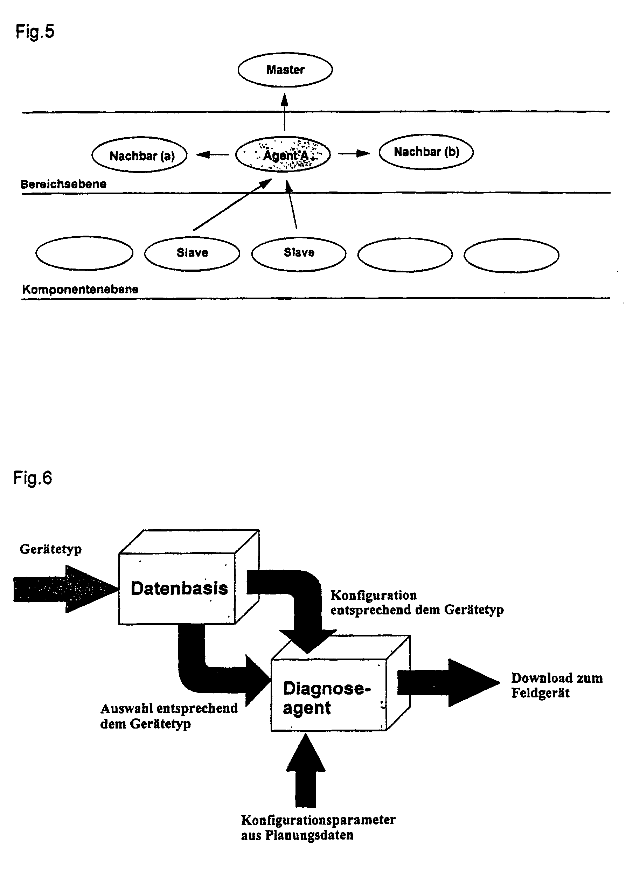

Fig. 5 zeigt beispielhaft ein entworfenes Multiagentensystem MAS. Unterstützt durch die MAS-Technologie wird das System so entworfen, daß es hinsichtlich Strukturänderungen robust ist. Ist beispielsweise Nachbaragent (a) aus Fig. 5 nicht verfügbar, dann muß Agent A auf diese Situation reagieren können. Wird ein zusätzlicher Agent in die Struktur aufgenommen, dann müssen diejenigen Agenten informiert werden, mit denen der zusätzliche Agent kooperieren wird. Dies geschieht dadurch, daß der neue Agent sich im System anmeldet. Seine Anwesenheit und seine Fähigkeiten der Diagnose und Informationsbeschaffung sind dadurch dem Multiagentensystem bekannt. Das heißt, durch die Abbildung der Prozessstruktur in ein Multiagentensystem MAS kann ein sich neu integrierender Diagnoseagent sich an seiner Umgebung orientieren und sich entsprechend den Anforderungen der Diagnoseaufgabe konfigurieren.

Die informationstechnische Entwicklung eines Multiagentensystems als Diagnosesystem und der einzelnen Diagnoseagenten erfolgt nach den Vorgaben aus dem Gebiet der Verteilten Künstlichen Intelligenz. Dafür kann eine auf dem Markt erhältliche Software-Entwicklungsumgebung eingesetzt werden. Wichtig ist der Aufbau der z.B. hierarchischen Kommunikations- und Kooperationsstruktur sowie die interne Struktur der Agenten nach Kommunikationsfähigkeit, formale Bestimmung der Aufgaben, Wissen über die Anlage und den Prozeß, sowie die mögliche Planung der Diagnoseaufgabe.

Die Generierung des Multiagentensystems kann weitgehend automatisiert erfolgen, da die zugrundeliegenden Planungsdaten der Anlage für den Aufbau der Kommunikationsstruktur eines Multiagentensystem herangezogen werden können. Diese Planungsdaten liegen im allgemeinen in den Planungstools der Anlagenplaner vor und können durch Exportieren über eine definierte Softwareschnittstelle einem nachgeschalteten Multiagentensystem zur Verfügung gestellt werden. Allerdings ist es auch möglich, die Kommunikationsstruktur, d. h. die Topologie des Multiagentensystems per Hand aufzubauen. Dabei wird die verfahrenstechnische Struktur entsprechend im Multiagentensystem abgebildet.

Kooperation und Kommunikation sind wesentliche Merkmale der verteilten intelligenten Systeme. Die Kooperationsbedingungen verteilter Diagnoseagenten ergeben sich aus der Modellierung des Prozesses bzw. seiner Leittechnik. Durch die Anlehnung an die physikalische Struktur bzw. die in der Planung oder Konfiguration bereits vorhandene hierarchische Gliederung, wird eine möglichst weitgehende Übernahme der entsprechenden Modellinformationen aus diesen Bereichen erreicht.

Damit kann das notwendige Wissen der Struktur des gesamten Multi-Agenten-Diagnosesystems aus den Planungsdaten der jeweiligen technischen Anlage gewonnen und direkt in die Struktur des Multiagentensystems übersetzt werden. Die intelligenten Softwareagenten können in der Konfigurationsphase generiert werden. Dabei werden den Agenten A In ihrem Intentionen-Modul In Informationen über ihre Aufgabe und ihre Stellung innerhalb des Multiagentensystems MAS einprogrammiert.

Die spezifische Konfiguration der einzelnen Agenten läßt sich auch aus den Planungsdaten ableiten. Für Agenten auf der Feldebene, die keine untergeordneten Agenten zur Fehlerdiagnose haben, werden die relevanten Systeminformationen direkt aus den Feldgeräten gewonnen. Verfahrensgemäß wird der Diagnoseagent auf der Feldebene mit Hilfe verfügbarer Daten über die im System vorhandenen Feldgerätetypen ausgewählt und in Kombination mit den relevanten Systemdaten automatisch konfiguriert bzw. an seine Umgebung adaptiert. Anschließend erfolgt die Programmierung des entsprechenden Feldgerätes mit dem konfigurierten Agenten. Die Darstellung in Fig. 6 verdeutlicht das Prinzip. Ein Vorteil dieses Ansatzes ist es, daß die Hersteller der Feldgeräte in den Diagnose-Konfigurationsprozeß mit einbezogen werden können, da diese gleichzeitig zu den Feldgeräten die dazugehörigen Agenten zur Fehlerdignose bzw. alle relevanten Informationen dazu mitliefern können.

Ein nach den oben beschriebenen Prinzipien aufgebautes Multiagentensystem kann zur robusten und detailierten Fehlererkennung herangezogen werden. Hat der einem Subsystem oder Verfahrensmodul zugeordnete Diagnoseagent einen Fehler gemeldet, so kann zur weiteren Fehlerlokalisierung eine vertiefte Diagnose eingeleitet werden.

Die Fehlererkennung des Multiagentensystems erfolgt schrittweise, von unten nach oben, d.h. der Diagnoseagent auf der untersten Ebene hat die Aufgabe, mit den vom Feldgerät gelieferten Einzelmeldungen in Kombination mit seinen Systeminformationen eine Relevanzbewertung bezüglich der Prozeßstörung- und Fehlerdiagnose durchzuführen. Abhängig vom Ergebnis wird über das Bussystem eine Meldung an den hierarchisch höher angesiedelten Diagnoseagenten verschickt. Das eigentliche zu überwachende GUT-Verhalten der Komponenten und Teilprozesse wird durch die Neuronalen Netze in den Agenten realisiert, Abweichungen werden erkannt und weitergemeldet, wie in Fig. 3 gezeigt ist.

Der übergeordnete Diagnoseagent verarbeitet die über seine Sensor- und Kommunikations-Module eingehenden Meldungen und führt ebenfalls eine Bewertung durch, die auch durch Rückfragen nach weiteren Detailinformationen an die untergeordneten Agenten erfolgen kann. Das komprimierte Ergebnis dieser schrittweisen Bewertung wird von dem Agenten auf der Bedien- und Prozeßbeobachtungsebene ausgegeben. Somit kommt das Gesamtsystem durch schrittweise Informationsverdichtung zur Diagnose, d. h. das verteilte Diagnosesystem erfüllt die Voraussetzungen zur Alarmverdichtung und -filterung.

Auf der Bedienebene werden nur die verdichteten Meldungen ausgegeben, während des Diagnosevorganges bearbeitete Alarmmeldungen sind als solche gekennzeichnet. Sie werden allerdings aus Sicherheitsgründen und für spätere Untersuchungen weiterhin in einer Prozeßdatenbank abgelegt und längerfristig gespeichert.

Die Fehlerdetektion erfordert - wie oben beschrieben - einen Kommunikationsvorgang in der Leittechnikhierarchie von unten nach oben und dient auch zur Information des Operateurs auf der Warte. Die geforderten Sicherheitsvorkehrungen (Abschaltungen, etc.) beim Überschreiten sicherheitsrelevanter Grenzwerte sind davon nicht betroffen.

Zur Fehlerlokalisierung wird der umgekehrte Weg beschritten. Auf der Ebene, auf welcher der Fehler ausreichend detektiert wurde, wird der Diagnoseagent die Fehlerlokalisierung in tieferen, prozessnäheren Anlagenteilen anstoßen. Mit dem Wissen über den detektierten Fehler können die Diagnoseagenten benötigte Prozessinformationen abfragen und zunächst mögliche Störungsursachen ausscheiden bzw. bestätigen.

Dieses Verfahren führt somit zu einer engineering-reduzierten Diagnose, da in der Kommunikationsstruktur des Multiagentensystems die potentiellen Ursachen für die jeweiligen Anlagenstörungen kodiert sind. Und diese Kommunikationsstrukur ergibt sich aus den in jeder Analge vorliegenden Planungsdaten. Die MAS-Technologie ermöglicht damit ein automatisches Konfigurieren von Fehlerabweichungen und Fehlerursachen.

Ein weiterer Vorteil des Verfahrens besteht in der optimalen Anpassung des Multiagentensystems an das Leitsystem, z.B. gibt es Agenten direkt auf der untersten Ebene in den intelligenten Feldgeräten. Diese Agenten können an alle notwendigen Meßgrößen zur Fehlerbestimmung in ihrem Bereich, d.h. in ihrem Feldgerät, herankommen. Damit lassen sich detaillierte Fehlerdiagnosen realisieren. Das Multiagentensystem erkennt, ob überhaupt ein Fehler in der Anlage vorliegt und in welchen Bereichen dieser auftritt.

Der dritte wesentliche Vorteil des Verfahrens gegenüber herkömmlichen Technologien besteht in der Adaptivität, da durch den Einsatz von Neuronalen Netzen ein automatisches Prozeßabbild der Anlage gelernt werden kann und dieses Prozeßabbild bei Bedarf inkrementell an die Anlage angepaßt werden kann.

## Patentansprüche

1. Prozeßdiagnosesystem zur Diagnose von Vorgängen und Zuständen eines technischen Prozesses, insbesondere eines Kraftwerksprozesses,
a) das ein dem Prozeß entsprechend strukturiertes Multiagentensystem (MAS) mit mehreren autonomen Diagnoseagenten (A) enthält, die auf mehrere Komponenten (4, 5) eines zum technischen Prozeß gehörenden leittechnischen Systems (L) verteilt angeordnet sind,
b) die Diagnoseagenten (A) jeweils enthalten: ein Sensor-Modul (Se) zur Erfassung von Prozeßwerten und Nachrichten aus dem leittechnischen System (L), ein Aktor-Modul (Ak), mit dem der Diagnoseagent (A) auf den Prozeß zurückwirkt, insbesondere durch Sollwertvorgaben oder Parametereinstellung an Feldgeräten (5), ein Verarbeitungsmodul (Ve), mit dem ein Prozeßmodell, Informationen über den Prozeß und Diagnoseaufgaben speicherbar sind und mit dem Diagnosefunktionen durchführbar sind, ein Kommunikationsmodul (Ko) für einen Informationsaustausch zwischen den Diagenoseagenten (A), sowie ein Intentionen-Modul (In), in dem die Aufgaben und Ziele des Agenten einprogrammiert sind, und wobei
c) das Verarbeitungsmodul (Ve) jeweils ein integriertes Neuronales Netz (NN) enthält, mit dessen Hilfe ein Referenzverhalten zu überwachender Teile des Prozesses erlernbar ist und eine aütomatisierte Anpassung an ein neues Referenzverhalten ermöglicht ist.

2. Prozeßdiagnosesystem nach Anspruch 1, **dadurch gekennzeichnet, daß** ein Teil der Diagnoseagenten (A) in intelligenten Feldgeräten (5) integriert ist.

3. Prozeßdiagnosesystem nach Anspruch 1 oder 2, **dadurch gekennzeichnet, daß** als Neuronales Netz (NN) ein Netz verwendet ist, das eine Adaption ermöglicht, indem automatisch Prozeßänderungen neu erlernbar sind, ohne bereits erlernte relevante Prozeßzusammenhänge zu verlieren.

4. Prozeßdiagnosesystem nach Anspruch 3, **dadurch gekennzeichnet, daß** als Neuronales Netz (NN) ein lokal approximierendes Netz verwendet ist.

5. Verfahren zur Durchführung einer Prozeßdiagnose mit Hilfe eines Prozeßdiagnosesystems nach einem der vorstehenden Ansprüche, wobei
a) in jedem Diagnoseagenten (A)
a1) in einer Erst-Inbetriebnahmephase das Referenzverhalten der durch ihn zu überwachenden Teile des Prozesses erlernt und als Sollverhalten gespeichert wird,
a2) in einer Anwendungsphase das Ist-Verhalten der Prozeß-Komponenten erfaßt und mit dem gespeicherten Sollverhalten verglichen wird, und
a3) eine erkannte Abweichung an dem im strukturierten Multiagentensystem (MAS) verfahrenstechnisch übergeordneten Diagnoseagenten (z.B. MA) gemeldet wird, und
b) im übergeordneten Diagnoseagenten basierend auf den Abweichungsmeldungen der verfahrenstechnisch untergeordneten Diagnoseagenten (z.B. A1) und basierend auf dem von ihm gespeicherten Referenzverhalten eine Diagnose durchgeführt wird, und
b1) falls dabei kein Fehler erkannt wird, der übergeordnete Diagnoseagent den untergeordneten Diagnoseagenten meldet, daß kein Fehler vorliegt und das Referenzmodell in den untergeordneten Diagnoseagenten anzupassen ist,
b2) falls der übergeordnete Diagnoseagent einen Fehler erkennt, er diesen an seinen übergeordneten Diagnoseagenten meldet, oder entsprechend seiner Konfiguration eine Fehlermeldung mittels einer Meldeeinrichtung (1) ausgibt.

6. Verfahren nach Anspruch 5, **dadurch gekennzeichnet, daß** eine automatisierte Anpassung an ein neues Referenzverhalten durchgeführt wird, indem der übergeordnete Diagnoseagent dem untergeordneten Diagnoseagenten die Adaption freischaltet.

## Claims

1. Process diagnosis system for the diagnosis of processes and states of a technical process, in particular of a power station process,
a) which contains a multiagent system (MAS), which is structured in accordance with the process and contains a plurality of autonomous diagnostic agents (A), which are arranged distributed over a plurality of components (4, 5) of a process control system (L) that belongs to the technical process,
b) the diagnostic agents (A) each contain: a sensor module (Se) for the acquisition of process values and messages from the process control system (L), an actuator module (Ac), with which the diagnostic agent (A) reacts on the process, in particular by prescribing set points or setting parameters on field instruments (5), a processing module (Pm), with which a process model, information about the process and diagnostic tasks can be stored and with which diagnostic functions can be carried out, a communications module (Co) for the exchange of information between the diagnostic agents (A), and an intentions module (In), into which the tasks and objectives of the agents are programmed, and
c) the processing module (Pm) in each case containing an integrated neural network (NN) with whose aid a reference behaviour of those parts of the process which are to be monitored can be learned and automatic adaptation to a new reference behaviour is enabled.

2. Process diagnosis system according to Claim 1, **characterized in that** some of the diagnostic agents (A) are integrated into intelligent field instruments (5).

3. Process diagnosis system according to Claim 1 or 2, **characterized in that** the neural network (NN) used is a network which enables adaptation, **in that** process changes can be relearned automatically without losing relevant process relationships that have already been learned.

4. Process diagnosis system according to Claim 3, **characterized in that** the neural network (NN) used is a locally approximating network.

5. Method for carrying out a process diagnosis with the aid of a process diagnosis system according to one of the preceding claims, it being the case that
a) in each diagnostic agent (A)
a1) in a first commissioning phase the reference behaviour of those parts of the process which are to be monitored by said agent are learned and stored as intended behaviour,
a2) in an application phase the actual behaviour of the process components is registered and compared with the stored intended behaviour, and
a3) any deviation detected is reported to the diagnostic agent (e.g. MA) which, in process control terms, is of higher order in the structured multiagent system (MAS), and
b) in the higher-order diagnostic agent, a diagnosis is carried out on the basis of the deviation reports from the diagnostic agents (e.g. A1) which, in process control terms, are of lower order, and based on the reference behaviour stored by said agent, and
b1) if no fault is detected, the higher-order diagnostic agent reports to the lower-order diagnostic agent that there is no fault present and that the reference model in the lower-order diagnostic agent is to be adapted,
b2) if the higher-order diagnostic agent detects a fault, it reports this to its higher-order diagnostic agent or, depending on its configuration, outputs a fault report by means of a reporting device (1).

6. Method according to Claim 5, **characterized in that** automatic adaptation to a new reference behaviour is carried out, **in that** the higher-order diagnostic agent releases the adaptation to the lower-order diagnostic agent.

## Revendications

1. Système de diagnostic de processus pour le diagnostic de processus et d'états d'un processus industriel, en particulier d'un procesus de centrale électrique,
a) qui comprend un système multi-agents (MAS) structuré en accord avec le processus, avec plusieurs agents de diagnostic (A) autonomes, qui sont répartis sur plusieurs composants (4, 5) d'un système de gestion (L) faisant partie du processus technique,
b) les agents de diagnostic (A) comprenant chacun: un module senseur (Se) pour acquérir des valeurs de processus et des informations à partir du système de gestion (L), un module acteur (Ak) par lequel l'agent de diagnostic (A) agit en retour sur le processus, en particulier en spécifiant des valeurs de consigne ou en réglant des paramètres sur des appareils de terrain (5), un module de traitement (Ve), avec lequel un modèle de processus, des informations sur le processus et des tâches de diagnostic peuvent être mémorisées et avec lequel des fonctions de diagnostic peuvent être exécutées, un module de communication (Ko) pour un échange d'informations entre les agents de diagnostic (A), ainsi qu'un module d'intentions (In), dans lequel les tâches et les objectifs de l'agent sont programmés,
c) le module de traitement (Ve) comprenant chaque fois un réseau neuronal (NN) intégré, à l'aide duquel un comportement de référence de parties à surveiller du processus peut être appris et une adaptation automatique à un nouveau comportement de référence est possible.

2. Système de diagnostic de processus selon la revendication 1, **caractérisé en ce qu'**une partie des agents de diagostic (A) sont intégrés dans des appareils de terrain (5) intelligents.

3. Système de diagnostic de processus selon la revendication 1 ou 2, **caractérisé en ce qu'**on utilise comme réseau neuronal (NN), un réseau qui permet une adaptation, en effectuant un apprentissage automatique de modifications du processus sans pour autant que soient perdues les relations de processus pertinentes déjà apprises.

4. Système de diagnostic de processus selon la revendication 3, **caractérisé en ce qu'**on utilise comme réseau neuronal (NN), un réseau à approximation locale.

5. Procédé de réalisation d'un diagnostic de processus à l'aide d'un système de diagnostic de processus selon une des revendications précédentes, dans lequel
a) dans chaque agent de diagnostic (A)
a1) dans une phase de première mise en service, le comportement de référence des parties de processus à surveiller par lui est apris et mémorisé comme comportement de consigne,
a2) dans une phase d'application, le comportement réel des composants du processus est mesuré et comparé au comportement de consigne mémorisé, et
a3) un écart détecté est signalé à l'agent de diagnostic (par exemple MA) hiérarchiquement supérieur sur le plan du procédé, dans le système multi-agents structuré (MAS),
b) dans l'agent de diagnostic hiérarchiquement supérieur, sur la base des messages d'écart de l'agent de diagnostic hiérarchiquement inférieur et sur la base du comportement de référence mémorisé par celui-ci, un diagnostic est réalisé et
b1) si aucun défaut n'est constaté, l'agent de diagnostic hiérarchiquement supérieur indique à l'agent de diagnostic hiérarchiquement inférieur qu'il n'y a pas de défaut et que le modèle de référence dans l'agent de diagnostic hiérarchiquement inférieur doit être adpaté et
b2) si l'agent de diagnostic hiérarchiquement supérieur détecte un défaut, il le signale à l'agent de diagnostic qui lui est hiérarchiquement supérieur, ou en focntion de sa configuration, délivre un message de défaut par l'intermédiaire d'un dispositif d'indication (1).

6. Procédé selon la revendication 5, **caractérisé en ce qu'**une adaptation automatique à un nouveau comportement de référence est réalisée par le fait que l'agent de diagnostic hiérarchiquement supérieur autorise l'adaptation par l'agent de diagnostic hiérarchiquement inférieur.
